# EUROPÄISCHE PATENTSCHRIFT

(11) **EP 4 023 864 B1**
(45) Veröffentlichungstag und Bekanntmachung des Hinweises auf die Patenterteilung: **26.06.2024**
(21) Anmeldenummer: 21206584.1
(22) Anmeldetag: 05.11.2021
(51) Int. Cl.: F01N 3/20, F01N 3/027

(54) **ELEKTRISCHE ABGASHEIZEINHEIT**
ELECTRICAL EXHAUST GAS HEATING UNIT
UNITÉ ÉLECTRIQUE DE CHAUFFAGE POUR GAZ D'ÉCHAPPEMENT

(30) Priorität: 09.12.2020 DE 102020132800
(43) Veröffentlichungstag der Anmeldung: 06.07.2022
(73) Patentinhaber: Purem GmbH, 66539 Neunkirchen (DE)
(72) Erfinder: Gaiser, Gerd, Reutlingen (DE)
(74) Vertreter: Ruttensperger Lachnit Trossin Gomoll

(56) Entgegenhaltungen:
- EP-A1- 3 532 714
- WO-A1-2017/005579
- WO-A1-2017/151975
- DE-A1-102019 107 384
- US-A- 5 672 324

## Beschreibung

Die vorliegende Erfindung betrifft eine Abgasheizeinheit für eine Abgasanlage einer Brennkraftmaschine, mit welcher insbesondere in einer Anfangsphase des Betriebs einer Brennkraftmaschine bei vergleichsweise niedriger Abgastemperatur bzw. vergleichsweise niedriger Temperatur der in der Abgasanlage zur Abgasbehandlung angeordneten Systembereiche, wie zum Beispiel einer Katalysatoreinheit oder einer Partikelfiltereinheit, Wärme auf in der Abgasanlage strömendes Abgas und damit auch auf stromabwärts einer derartigen Abgasheizeinheit angeordnete Systembereiche übertragen werden kann. Durch eine derartige Abgasheizeinheit kann in der Anfangsphase des Betriebs einer Brennkraftmaschine die Zeitdauer bis zum Erreichen einer ausreichend hohen Temperatur der zur Abgasbehandlung bzw. zur Minderung des Schadstoffanteils im Abgas vorgesehenen Systembereiche verkürzt werden und somit der Schadstoffausstoß in der Anfangsphase des Betriebs einer Brennkraftmaschine gesenkt werden.

Eine derartige Abgasheizeinheit ist aus der DE 10 2019 107 384 A1 bekannt. Diese Abgasheizeinheit umfasst einen Mantelheizleiter mit im Wesentlichen kreisrundem Querschnitt mit einem in einem Mantel elektrisch isoliert gehaltenen, drahtartigen Heizleiterelement. An den beispielsweise mit Metallmaterial aufgebauten Mantel ist ein aus gebogenem Flachbandmaterial aufgebautes Wärmeübertragungsflächenelement angebunden, welches eine wellenartige Struktur aufweist und in zwischen Wellenscheitelten der wellenartigen Struktur liegenden Wellenflächenbereichen von dem Mantelheizleiter durchsetzt ist und zur Wärmeübertragung an dessen Mantel angebunden ist. Durch das Bereitstellen des mit wellenartiger Struktur aufgebauten Wärmeübertragungsflächenelements, welches im Abgasstrom mit seinen Stirnseiten im Wesentlichen orthogonal zu einer Abgashauptströmungsrichtung angeordnet ist und mit seinen Breitenseiten im Wesentlichen parallel zur Abgashauptströmungsrichtung angeordnet ist, wird eine große Oberfläche zur Wärmeübertragung bereitgestellt. Diese Oberfläche wird dadurch noch vergrößert, dass der Mantelheizleiter mit dem an den Mantel desselben angebundenen und mit wellenartiger Struktur aufgebauten Wärmeübertragungsflächenelement einen spiralartig gewundenen Verlauf aufweist, so dass der eine Substruktur bereitstellenden wellenartigen Struktur des Wärmeübertragungsflächenelements eine spiralartige Struktur überlagert ist.

Eine Abgasheizeinheit gemäß dem Oberbegriff des Anspruchs 1 ist aus der WO 2017/151975 A1 bekannt. Bei dieser bekannten Abgasheizeinheit sind in einem Gehäuse nebeneinander zwei jeweils durch einen Heizleiterelement-Längenbereich mit wellenartiger Struktur bereitgestellte Heizleiterelemente angeordnet. Die Heizleiter Elemente sind durch diese durchsetzende, stabartige Trägerelemente in Abstand zueinander elektrisch isoliert an dem Gehäuse getragen.

Es ist die Aufgabe der vorliegenden Erfindung, eine Abgasheizeinheit mit verbessertem Wärmeübertragungsvermögen bereitzustellen.

Erfindungsgemäß wird diese Aufgabe gelöst durch eine Abgasheizeinheit für eine Abgasanlage einer Brennkraftmaschine gemäß Anspruch 1. Diese Abgasheizeinheit umfasst wenigstens ein elektrisch leitendes Heizleiterelement. Bei der Abgasheizeinheit ist das wenigstens eine elektrisch leitende und im Heizbetrieb von elektrischem Strom durchflossene Heizleiterelement aus gebogenem Flachbandmaterial aufgebaut.

Bei der erfindungsgemäß aufgebauten Abgasheizeinheit ist das von elektrischem Strom durchflossene Heizleiterelement selbst aus gebogenem Flachbandmaterial aufgebaut und stellt somit eine große im Heizbetrieb direkt von Abgas umströmbare Wärmeübertragungsfläche bereit. Eine derartige Ausgestaltung vermeidet zusätzlich zu erwärmende Komponenten, wie beispielsweise einen Mantel oder das einen derartigen Mantel bezüglich des Heizleiterelements isolierende Material und weist somit eine deutlich geringere thermische Trägheit auf, da das von Abgas umströmte und somit mit diesem in Kontakt tretende, von elektrischem Strom durchflossene Bauteil, also das Heizleiterelement, selbst mit einer eine große Oberfläche bereitstellenden Geometrie ausgebildet ist.

Zum Erhalt einer großen zur Wärmeübertragung nutzbaren bzw. vorgesehenen Oberfläche wird vorgeschlagen, dass das wenigstens eine Heizleiterelement im Wesentlichen parallel zu einer Abgashauptströmungsrichtung anzuordnende Breitenseiten und im Wesentlichen orthogonal zur Abgashauptströmungsrichtung anzuordnende Stirnseiten aufweist, und dass eine Erstreckungslänge der Breitenseiten des Heizleiterelements in einer Breitenrichtung im Bereich von 10 mm bis 20 mm liegt oder/und eine Erstreckungslänge der Stirnseiten des Heizleiterelements in einer Dickenrichtung im Bereich von 0,05 mm bis 0,2 mm liegt oder/und ein Verhältnis der Erstreckungslänge der Stirnseiten des Heizleiterelements in der Dickenrichtung zur Erstreckungslänge der Breitenseiten des Heizleiterelements in der Breitenrichtung im Bereich von 0,002-0,025 liegt.

Um durch Anlegen einer elektrischen Spannung das Heizleiterelement zu erwärmen, kann das Flachbandmaterial Metallmaterial oder elektrisch leitendes Keramikmaterial sein. Ferner kann das Wärmeübertragungsvermögen dadurch weiter verbessert werden, dass das Flachbandmaterial eine elektrisch nicht isolierte Oberfläche zur Umströmung durch Abgas bereitstellt. Das wenigstens eine Heizleiterelement kann in Längsendbereichen zur elektrischen Verbindung mit einer Spannungsquelle ausgebildet sein.

Zum Bereitstellen einer großen Wärmeübertragungsfläche ist das wenigstens eine Heizleiterelement mit wellenartiger Struktur ausgebildet.

Es ist darauf hinzuweisen, dass im Sinne der vorliegenden Erfindung eine wellenartige Struktur beispielsweise durch einen näherungsweise sinusartigen, zick-zack-artigen, sägezahnartigen oder einen in ähnlicher Weise gebildeten Verlauf mit krümmungsartigen oder kantenartigen Wellenscheiteln und dazwischen liegenden, näherungsweise geradlinig, z.B. zueinander parallel sich erstreckenden oder zumindest bereichsweise gekrümmt verlaufenden Wellenflächenbereichen bereitgestellt sein kann. Ein derartiger eine wellenartige Struktur bereitstellender Verlauf kann ein periodisch sich wiederholendes Wellenmuster bereitstellen, kann jedoch auch ein Wellenmuster mit sich zumindest in verschiedenen Bereichen des wenigstens einen Heizleiterelements ändernder Wellenlänge, also sich änderndem Abstand zwischen Wellenscheiteln, aufweisen. Diese wellenartigen Struktur des wenigstens einen Heizleiterelements kann eine Substruktur bilden, welcher eine größere bzw. übergeordnete Struktur des Heizleiterelements, beispielsweise eine mäanderartige Struktur, überlagert sein kann.

Insbesondere wenn das wenigstens eine Heizleiterelement eine nach außen frei liegende elektrisch leitende Oberfläche aufweist, gleichwohl jedoch der von Abgas durchströmbare Querschnitt sehr effizient mit dem Heizleiterelement abgedeckt werden soll, ist es zum Vermeiden eines Kurzschlusses vorteilhaft, dass das wenigstens eine Heizleiterelement zueinander benachbart verlaufende und bezüglich einander elektrisch isoliert angeordnete Heizleiterelement-Längenbereiche umfasst. Bei einer erfindungsgemäßen Ausgestaltungsform ist vorgesehen, dass das wenigstens eine Heizleiterelement mit mäanderartigem Verlauf angeordnet ist, und dass die einander benachbart verlaufenden Heizleiterelement-Längenbereiche durch in Übergangsbereichen aneinander anschließende, nebeneinander verlaufende Mäanderabschnitte bereitgestellt sind.

Die elektrische Isolierung ist in einfach zu realisierender, gleichwohl effizient wirkender Weise dadurch bereitgestellt, dass die einander benachbart verlaufenden Heizleiterelement-Längenbereiche durch Anordnen von elektrisch isolierendem, flachbandartigem Material zwischen diesen bezüglich einander elektrisch isoliert sind.

Eine effiziente Übertragung von Wärme auf zu erwärmendes Abgas wird gemäß einer weiteren erfindungsgemäßen Ausgestaltung dadurch erreicht, dass eine Mehrzahl der aus gebogenem Flachbandmaterial aufgebauten, bezüglich einander elektrisch isoliert angeordneten Heizleiterelementen vorgesehen ist.

Dabei kann wenigstens ein Teil der Heizleiterelemente zueinander elektrisch parallel geschaltet sein.

Auch bei dieser erfindungsgemäßen Anordnung stellen die Heizleiterelemente im Wesentlichen geradlinig langgestreckte, nebeneinander verlaufende Heizleiterelement-Längenbereiche bereit.

Zum Vermeiden eines elektrischen Kurzschlusses zwischen den einzelnen Heizleiterelementen sind die Heizleiterelemente durch Anordnen von elektrisch isolierendem, flachbandartigem Material zwischen diesen bezüglich einander elektrisch isoliert. Es ist in diesem Zusammenhang darauf hinzuweisen, dass selbstverständlich dort, wo die Heizleiterelemente zum Anschluss an eine Spannungsquelle ausgebildet sind, diese beispielsweise durch Parallelschaltung oder serielle Schaltung elektrisch leitend miteinander verbunden sein können. In den zwischen den zur elektrischen Kontaktierung vorgesehenen Bereichen, beispielsweise den jeweiligen Längsendbereichen der Heizleiterelemente, liegenden Längenbereichen sind diese dann beispielsweise durch die vorangehend dargelegten Maßnahmen bezüglich einander elektrisch isoliert, um in zwischen den Anschlussbereichen liegenden Längenbereichen einen Kurzschluss zu vermeiden.

Für eine definierte Positionierung im Abgasstrom kann eine das wenigstens eine Heizleiterelement in vorgegebener Position tragende Trägerstruktur vorgesehen sein.

Hierzu kann beispielsweise die Trägerstruktur wenigstens ein Trägerelement mit zwischen Scheitelbereiche der der wellenartigen Struktur des wenigstens einen Heizleiterelements eingreifenden Positioniervorsprüngen umfassen, oder/und kann die Trägerstruktur wenigstens ein Trägerelement mit Scheitelbereiche der wellenartigen Struktur des wenigstens einen Heizleiterelements aufnehmenden Positionieraussparungen umfassen, oder/und kann die Trägerstruktur wenigstens ein in Positionieraussparungen in Scheitelbereichen des wenigstens einen Heizleiterelements eingreifendes Trägerelement umfassen.

Alternativ oder zusätzlich kann zur Vorgabe bzw. zum Beibehalt einer definierten Positionierung vorgesehen sein, dass die Trägerstruktur wenigstens ein an zwischen Wellenscheiteln der wellenartigen Struktur des wenigstens einen Heizleiterelements verlaufenden Wellen-Flächenabschnitten gehaltenes Trägerelement umfasst.

Dabei kann wenigstens ein Trägerelement die Wellen-Flächenabschnitte durchsetzen. Alternativ oder zusätzlich kann wenigstens ein Trägerelement an einer Stirnseite des wenigstens einen Heizleiterelements im Bereich der Wellen-Flächenabschnitte getragen sein.

Ferner kann zur Unterstützung einer definierten Positionierung die Trägerstruktur wenigstens ein an einer Stirnseite des wenigstens einen Heizleiterelements angeordnetes Trägerelement mit einer Mehrzahl von vorzugsweise in sternartiger Konfiguration angeordneten Trägerarmen umfassen. Vorzugsweise sind derartige Trägerelemente sowohl an der Anströmseite als auch der Abströmseite des wenigstens einen Heizleiterelements angeordnet.

Für eine kompakte, baulich einfach zu realisierende Ausgestaltung kann die Trägerstruktur das elektrisch isolierende Material umfassen.

Für eine weiter erhöhte Effizienz in der Minderung des Schadstoffausstoßes einer Brennkraftmaschine wird vorgeschlagen, dass das wenigstens eine Heizleiterelement wenigstens bereichsweise mit katalytisch wirksamem Material beschichtet ist. Durch das Vorsehen derartigen katalytisch wirksamen Materials an dem wenigstens einen Heizleiterelement wird einerseits dessen Oberfläche im Abgasstrom zusätzlich zur Durchführung einer zur Minderung des Schadstoffausstoßes beitragenden katalytischen Reaktion genutzt. Andererseits wird dieses am wenigstens einen Heizleiterelement vorgesehene katalytisch wirksame Material bereits in der Startphase des Betriebs einer Brennkraftmaschine bei elektrischer Erregung des wenigstens einen Heizleiterelements dadurch, dass das katalytisch wirksame Material direkt auf dem von Strom durchflossenen Heizelement vorgesehen ist, erwärmt, so dass die durch dieses Material bereitgestellte katalytische Reaktion unmittelbar nach Beginn der Erregung des wenigstens einen Heizleiterelements, also nach Anlegen einer elektrischen Spannung an dieses, einsetzen kann und bereits auch in einer Betriebsphase, in welcher eine im Abgasstrom folgende Abgasbehandlungseinheit noch nicht die für die Durchführung einer katalytischen Reaktion erforderliche Temperatur erreicht hat, in der Abgasheizeinheit ein Beitrag zur Minderung des Schadstoffausstoßes geleistet werden kann.

Hierzu kann beispielsweise vorgesehen sein, dass das katalytisch wirksame Material, vorzugsweise enthaltend Platin oder/und Palladium oder/und Rhodium, eine Drei-Wege-Katalysatorfunktion bereitstellt, oder/und dass das katalytisch wirksame Material, vorzugsweise enthaltend Titanoxid oder/und Zirkoniumoxid oder/und Aluminiumoxid, eine Hydrolyse-Katalysatorfunktion bereitstellt, oder/und dass das katalytisch wirksame Material, vorzugsweise enthaltend Platin oder/und Palladium oder/und Barium, eine Stickoxid-Speicherkatalysatorfunktion bereitstellt, oder/und dass das katalytisch wirksame Material, vorzugsweise enthaltend Platin oder/und Palladium, eine Diesel-Oxidationskatalysatorfunktion bereitstellt, oder/und dass das katalytisch wirksame Material, vorzugsweise enthaltend Eisen-Zeolith oder/und Kupfer-Zeolith oder/und Vanadiumoxid, eine SCR-Katalysatorfunktion bereitstellt.

Die Erfindung betrifft ferner eine Abgasanlage für eine Brennkraftmaschine, umfassend wenigstens eine erfindungsgemäß aufgebaute Abgasheizeinheit.

Um die durch die Abgasheizeinheit in diese umströmendes Abgas eingetragene Wärme effizient nutzen zu können, wird vorgeschlagen, dass die wenigstens eine Abgasheizeinheit stromaufwärts bezüglich wenigstens einer Abgasbehandlungseinheit, vorzugsweise Katalysatoreinheit oder/und Partikelfiltereinheit, angeordnet ist.

Um die durch das wenigstens eine Heizleiterelement einer erfindungsgemäß aufgebauten Abgasheizeinheit bereitgestellte vergleichsweise große Wärmeübertragungsoberfläche bei möglichst geringem Strömungswiderstand zur Wärmeübertragung effizient nutzen zu können, wird vorgeschlagen, dass das wenigstens eine Heizleiterelement der wenigstens einen Abgasheizeinheit mit in einer Breitenrichtung sich erstreckenden Breitenseiten im Wesentlichen parallel zu einer Abgashauptströmungsrichtung angeordnet ist und mit in einer Dickenrichtung sich erstreckenden Stirnseiten im Wesentlichen orthogonal zur Abgashauptströmungsrichtung angeordnet ist.

Die vorliegende Erfindung wird nachfolgend mit Bezug auf die beiliegenden Figuren detailliert beschrieben. Es zeigt:
- Fig. 1: eine Draufsicht auf eine nicht erfindungsgemäß aufgebaute Abgasheizeinheit mit einem aus Flachbandmaterial aufgebauten Heizleiterelement;
- Fig. 2: einen Abschnitt einer Abgasanlage für eine Brennkraftmaschine mit einer Abgasheizeinheit gemäß Fig. 1;
- Fig. 3: eine perspektivische Ansicht einer in einer Trägerstruktur angeordneten Abgasheizeinheit gemäß Fig. 1;
- Fig. 4: eine der Fig. 1 entsprechende Darstellung einer nicht erfindungsgemäß aufgebauten Abgasheizeinheit;
- Fig. 5: eine weitere der Fig. 1 entsprechende Darstellung einer nicht erfindungsgemäß aufgebauten Abgasheizeinheit;
- Fig. 6: eine weitere der Fig. 1 entsprechende Darstellung einer nicht erfindungsgemäß aufgebauten Abgasheizeinheit mit zwei mit Flachbandmaterial aufgebauten Heizleiterelementen;
- Fig. 7: eine Abwandlung der in Fig. 6 dargestellten Ausgestaltungsform mit vier mit Flachbandmaterial aufgebauten Heizleiterelementen;
- Fig. 8: eine erfindungsgemäße Ausgestaltungsart einer Abgasheizeinheit mit einem mit wellenartiger Struktur ausgebildeten Heizleiterelement, das mit mäanderartigem Verlauf angeordnet ist;
- Fig. 9: eine weitere erfindungsgemäße Abgasheizeinheit mit einer Mehrzahl von nebeneinander liegenden, im Wesentlichen geradlinig sich erstreckenden Heizleiterelementen mit wellenartiger Struktur;
- Fig. 10: eine die Herstellung eines Heizleiterelements aus Flachbandmaterial veranschaulichende Darstellung;
- Fig. 11: zwei durch elektrisch isolierendes Material voneinander getrennte Heizleiterelement-Längenbereiche;
- Fig. 12: eine der Fig. 11 entsprechende Darstellung zweier durch elektrisch isolierendes Material voneinander getrennter Heizleiterelement-Längenbereiche, wobei das elektrisch isolierende Material einen Teil einer Trägerstruktur bildet;
- Fig. 13: eine perspektivische Ansicht eines Teils des elektrisch isolierenden Materials der Fig. 12;
- Fig. 14: eine perspektivische Ansicht eines Abschnitts von zwischen Heizleiterelement-Längenbereichen oder Heizleiterelementen anzuordnendem, elektrisch isolierendem Material, welches auch Teil einer Trägerstruktur bildet;
- Fig. 15: zwei Heizleiterelement-Längenbereiche mit dazwischen angeordnetem elektrisch isolierendem Material, welches Teil einer Trägerstruktur bildet;
- Fig. 16: eine der Fig. 14 entsprechende alternative Ausgestaltungsart von einen Teil einer Trägerstruktur bildendem elektrisch isolierendem Material;
- Fig. 17: eine Querschnittansicht des elektrisch isolierenden Materials der Fig. 16;
- Fig. 18: eine Stirnansicht einer Trägerstruktur für ein nicht erfindungsgemäß aufgebautes, spiralartig verlaufendes Heizleiterelement;
- Fig. 19: einen Abschnitt eines Heizleiterelements mit wellenartiger Struktur und im Bereich von Wellenscheiteln mit diesem zusammenwirkenden Trägerelementen;
- Fig. 20: eine Seitenansicht einer Abwandlung der in Fig. 19 dargestellten Anordnung;
- Fig. 21: eine Abwandlung der in Fig. 19 dargestellten Ausgestaltungsart;
- Fig. 22: ein mit wellenartiger Struktur ausgebildetes Heizleiterelement mit Wellenflächenbereiche desselben durchsetzenden Trägerelementen einer Trägerstruktur;
- Fig. 23: ein Heizleiterelement mit wellenartiger Struktur und in Stirnseiten desselben ausgebildeten Aussparungen zur Aufnahme von Trägerelementen einer Trägerstruktur;
- Fig. 24: das in Fig. 23 dargestellte Heizleiterelement mit in die in den Stirnseiten ausgebildeten Aussparungen eingreifenden Trägerelementen;
- Fig. 25: ein Heizleiterelement mit im Bereich von Stirnseiten derselben vorgesehenen Verbindungsvorsprüngen für Trägerelemente;
- Fig. 26: das Heizleiterelement der Fig. 25 mit an den Stirnseiten desselben angeordneten Trägerelementen.

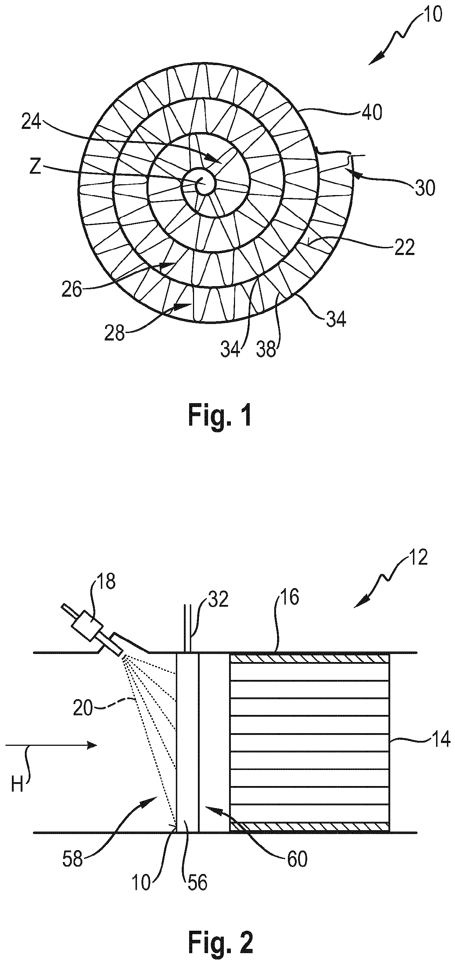

Die Fig. 1 zeigt eine Draufsicht auf eine allgemein mit 10 bezeichnete Abgasheizeinheit, welche in einer in Fig. 2 ausschnittsweise dargestellten Abgasanlage 12 einer Brennkraftmaschine stromaufwärts bezüglich einer beispielsweise als Katalysatoreinheit oder als Partikelfiltereinheit ausgebildeten Abgasbehandlungseinheit 14 angeordnet sein kann. Ebenso wie die Abgasbehandlungseinheit 14 kann die Abgasheizeinheit 10 an einer beispielsweise rohrartigen oder gehäuseartig ausgebildeten Abgasführungskomponente 16 in der Abgasanlage 12 derart getragen sein, dass das in der Abgasführungskomponente 16 in einer Abgashauptströmungsrichtung H auf die Abgasbehandlungseinheit 14 zu strömende Abgas zunächst die Abgasheizeinheit 10 durchströmt und im Heizbetrieb der Abgasheizeinheit 10 dort Wärme aufnimmt, welche das Abgas dann in die Abgasbehandlungseinheit 14 einträgt.

In dem in Fig. 2 dargestellten Ausgestaltungsbeispiel ist die Abgasbehandlungseinheit 14 als SCR-Katalysatoreinheit aufgebaut, und stromaufwärts bezüglich dieser bzw. auch bezüglich der Abgasheizeinheit 10 ist ein Injektor 18 vorgesehen, mit welchem ein Reaktionsmittel 20, beispielsweise eine Harnstoff/Wasser-Lösung, in den Abgasstrom und insbesondere auch auf die Abgasheizeinheit 10 zu eingeleitet wird.

Im Betrieb einer ein Brennkraftmaschine wird zumindest in einer Startphase dieses Betriebs die Abgasheizeinheit 10 in Betrieb gesetzt, um das noch vergleichsweise kalte von der Brennkraftmaschine ausgestoßene Abgas zu erwärmen, bevor es die Abgasbehandlungseinheit 14 durchströmt. Dadurch trägt das Abgas Wärme in die Abgasbehandlungsanordnung 14 ein, so dass diese auch am Beginn des Betriebs einer Brennkraftmaschine vergleichsweise schnell erwärmt wird und eine für die Durchführung der darin vorgesehenen katalytischen Reaktion erforderliche Temperatur erreicht. Da bei der in Fig. 2 dargestellten Ausgestaltung auch das Reaktionsmittel stromaufwärts der Abgasheizeinheit 10 in den Abgasstrom eingeleitet wird, beispielsweise direkt auf die Abgasheizeinheit 10 zu, wird auch dieses Reaktionsmittel 20 bei noch vergleichsweise niedriger Abgastemperatur an der Abgasheizeinheit 10 erwärmt und somit verstärkt verdampft, so dass die Durchmischung von Abgas und Reaktionsmittel 20 stromaufwärts der Abgasbehandlungseinheit 14 unterstützt wird.

Alternativ kann der Injektor 18 auch dazu vorgesehen sein, Kraftstoff, also Kohlenwasserstoff, stromaufwärts der Abgasheizeinheit 10 in den Abgasstrom einzuleiten. An der im Heizbetrieb erwärmten Oberfläche der Abgasheizeinheit 10 werden Kohlenwasserstoffe umgesetzt, wobei zusätzliche Reaktionswärme freigesetzt wird und somit die im Bereich der Abgasheizeinheit 10 bereitgestellte Heizleistung noch weiter erhöht werden kann. Das Einspritzen von Kraftstoff, also Kohlenwasserstoff, kann selbstverständlich auch in Verbindung mit einer als SCR-Katalysatoreinheit ausgebildeten Abgasbehandlungseinheit 14 erfolgen, um auch diese möglichst schnell auf Betriebstemperatur bringen zu können.

Die in Fig. 1 dargestellte Abgasheizeinheit 10 umfasst ein aus gebogenem Flachbandmaterial aufgebautes Heizleiterelement 22. Das Heizleiterelement 22 ist zum Bereitstellen einer großen von Abgas umströmbaren Oberfläche mit wellenartiger bzw. mäanderartiger Struktur ausgebildet und weist einen dieser wellenartigen Struktur überlagerten spiralartigen Verlauf auf. Es ergeben sich somit einander radial benachbarte und durch einzelne Windungsabschnitte des spiralartigen Verlaufs bereitgestellte Heizleiterelement-Längenbereiche 26, 28. In einem einem Spiralzentrum Z naheliegenden Längsendbereich 24 und einem ein äußeres Ende des spiralartigen Verlaufs bereitstellenden Längsendbereich 30 ist das elektrisch leitende Heizleiterelement 22 mit jeweiligen Anschlüssen oder Leitungsbereichen zur elektrischen Verbindung mit einer außerhalb des Abgasstroms angeordneten Spannungsquelle ausgebildet. Hierzu kann, wie in Fig. 2 angedeutet, an der die Abgasheizeinheit 10 aufnehmenden abgasführenden Komponente 16, welche gleichermaßen ein Gehäuse für die Abgasheizeinheit 10 bereitstellen kann, eine Durchführung 32 für derartige elektrische Verbindungsleitungen vorgesehen sein.

Aufgrund der wellenartigen Struktur des Heizleiterelements 22 weist dieses zwischen seinen Längsendbereichen 24, 30 eine Vielzahl von in der Längsrichtung des Heizleiterelements 22 aufeinander folgenden Wellenscheiteln 34 auf, die beispielsweise durch Krümmungsbereiche oder Kantenbereiche gebildet sein können. Zwischen jeweils zwei derartigen Wellenscheiteln 34 liegt ein Wellenflächenbereich 38, in welchem das Heizleiterelement 22 sich in seinem Verlauf zwischen den beiden diesen einschließenden Wellenscheiteln 34 beispielsweise näherungsweise geradlinig erstrecken kann oder zumindest bereichsweise auch gekrümmt sein kann.

Das durch Anlegen einer elektrischen Spannung selbst von elektrischem Strom durchflossene Heizleiterelement 22 kann mit Metallmaterial, beispielsweise einer Fe/Cr/Al-Legierung oder Edelstahl mit einem Aluminiumgehalt von mehr als 2%, aufgebaut sein und somit einen Hochtemperaturheizleiter bereitstellen. Auch die Ausgestaltung des Heizleiterelements 22 aus elektrisch leitendem Keramikmaterial ist möglich.

Um die nebeneinander verlaufenden Heizleiterelement-Längenbereiche 26, 28 elektrisch voneinander isoliert zu halten und somit einen Kurzschluss in Bereichen zwischen den zur elektrische Kontaktierung vorgesehenen Längsendbereichen 24, 30 zu vermeiden, kann zwischen den einander benachbarten Heizelement-Längenbereichen 26, 28 elektrisch isolierendes Material 40 angeordnet sein. Auch dieses kann aus Flachbandmaterial, beispielsweise thermisch beständigem Kunststoffmaterial oder elektrisch isolierendem Keramikmaterial, aufgebaut sein und ist an den spiralartigen Verlauf des mit wellenartiger Struktur bereitgestellten Heizleiterelements 22 angepasst.

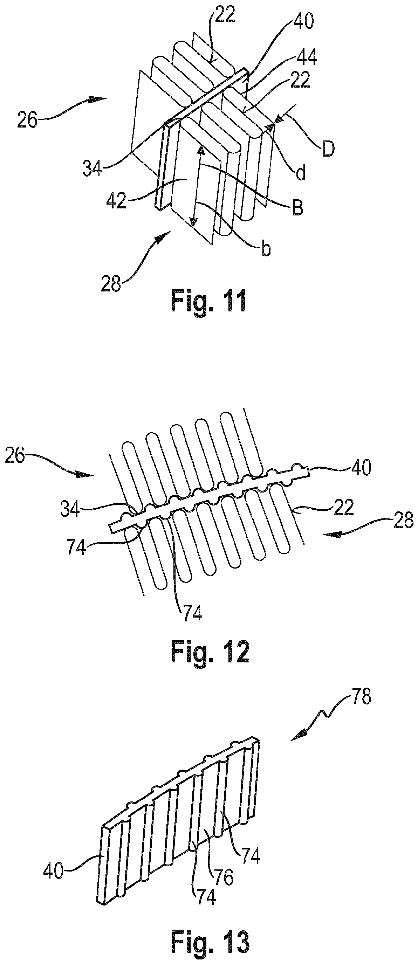

Wie die Fig. 11 dies veranschaulicht, liegt das Heizleiterelement 22 mit seinen Heizleiterelement-Längenbereichen 26, 28 im Bereich der Wellenscheitel 34 an dem elektrisch isolierenden Material 40 an, so dass ein gegenseitiger Kontakt der einander benachbarten Heizleiter-Längenbereiche 26, 28 nicht auftreten kann.

In Fig. 11 ist auch zu erkennen, dass das aus einem Flachbandmaterial aufgebaute und durch Biegen des Flachbandmaterials in seine wellenartige Form gebrachte Heizleiterelement 22 an Breitenseiten 42 derselben, welche in einer im Wesentlichen der Abgashauptströmungsrichtung H entsprechenden Breitenrichtung B langgestreckt sind, eine deutlich größere Erstreckungslänge b aufweist, als zur Abgashauptströmungsrichtung H im Wesentlichen orthogonal orientierte Stirnseiten 44. Beispielsweise kann das Heizleiterelement 22 mit einer Erstreckungslänge d der Stirnseiten 44 in der Dickenrichtung D im Bereich von 0,05 mm bi 0,2 mm ausgebildet sein, während eine Erstreckungslänge b der Breitenseiten 42 in der Breitenrichtung B im Bereich von 10 mm bis 20 mm liegen kann. Vorteilhafterweise liegt das Verhältnis der Erstreckungslänge d in der Dickenrichtung D zur Erstreckungslänge b in der Breitenrichtung B im Bereich von 0,002 bis 0,025. Der gegenseitige Abstand einander unmittelbar benachbarter Wellenscheitel kann beispielsweise im Bereich von 1 bis 4 mm liegen.

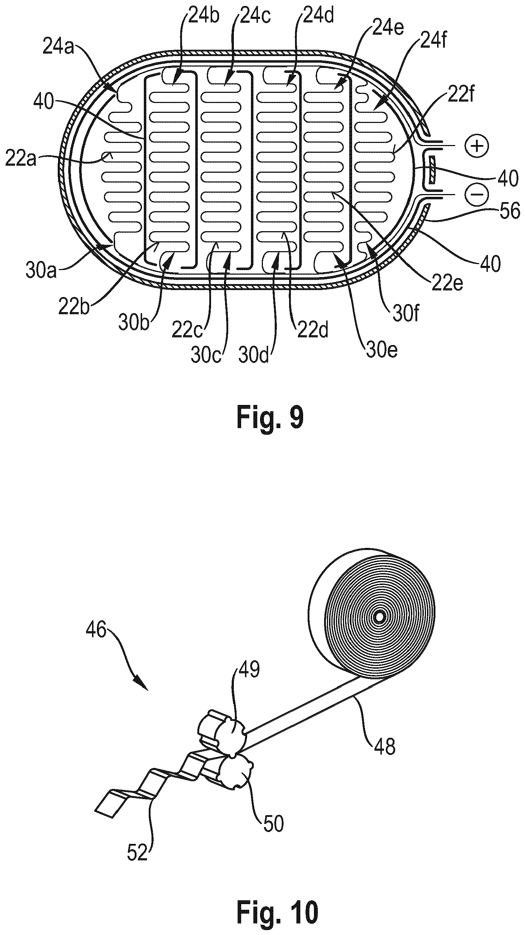

Hergestellt werden kann ein derartiges mit Flachbandmaterial aufgebautes Heizleiterelement 22 beispielsweise mit einer in Fig. 10 schematisch dargestellten Vorrichtung 46 mit zwei das Flachbandmaterial 48 zwischen sich aufnehmenden Formwalzen 49, 50 umfassen. Beim Durchlaufen dieser Formwalzen 49, 50 werden in dem Flachbandmaterial 48 Umformungsbereiche 52 gebildet, so dass, je nach dem vorgesehenen Krümmungsradius, die Wellenscheiteln 34 entweder als bogenartige Krümmungsbereiche verbleiben oder bei scharfkantiger Umformung als Kantenbereiche verbleiben. Somit kann durch die Umformung des Flachbandmaterials 48 auch die Charakteristik der wellenartigen Struktur beispielsweise als Zick-Zack-Struktur oder als mehr oder weniger sinusartige Struktur vorgegeben werden. Nach dem Bilden der Umformungsbereiche 52 wird das Flachbandmaterial 48 komprimiert, so dass die zwischen den Umformungsbereichen 52 bzw. den durch diese bereitgestellten Wellenscheiteln 34 liegende Wellenflächenbereiche 38 zueinander näherungsweise parallel verlaufen und somit die wellenartige mäanderartige Struktur des Heizleiterelements 22 erhalten wird.

Da bei Integration eines derart aufgebauten Heizleiterelements 10 in eine Abgasanlage 12 das von Strom durchflossene Bauteil, also das Heizleiterelement 22 direkt von dem zu erwärmenden Abgasstrom umströmt wird, wird eine effiziente Wärmeübertragung in den Abgasstrom gewährleistet, wobei aufgrund der Ausgestaltung des Heizleiterelements 22 aus Flachbandmaterial dieses eine große Oberfläche zur Übertragung von Wärme auf den Abgasstrom bereitstellt. Da ferner das Heizleiterelement 22 derart in den Abgasstrom integriert wird, dass dessen Stirnseiten 44 im Wesentlichen orthogonal zur Abgashauptströmungsrichtung H orientiert sind und somit die Breitenseiten 42 im Wesentlichen parallel zur Abgashauptströmungsrichtung H verlaufen, bietet das Heizleiterelement 22 trotz der großen zur Wärmeübertragung zur Verfügung stehenden Oberfläche desselben nur einen vergleichsweise geringen Strömungswiderstand. Dazu trägt auch bei, dass das elektrisch isolierende Material 40 gleichermaßen als Flachbandmaterial bereitgestellt ist und mit seinen Stirnseiten orthogonal zur Abgashauptströmungsrichtung orientiert ist.

Bei einer alternativen Ausgestaltung zur elektrischen Isolierung kann anstelle des elektrisch isolierenden Materials 40 zwischen den einander benachbarten Heizleiterelement-Längenbereichen ein spaltartiger Zwischenraum verbleiben, der von Abgas durchströmbar ist, so dass der Strömungswiderstand noch weiter gesenkt werden kann. Ein derartiger Abstand kann beispielsweise im Bereich von 1 bis 2 mm liegen. Gleichermaßen kann der Abstand einander benachbarter Wellenflächenbereiche 38 im Bereich von 1 bis 2 mm liegen, so dass auch innerhalb eines jeweiligen Heizleiterelement-Längenbereichs das Auftreten eines elektrischen Kurzschlusses vermieden ist.

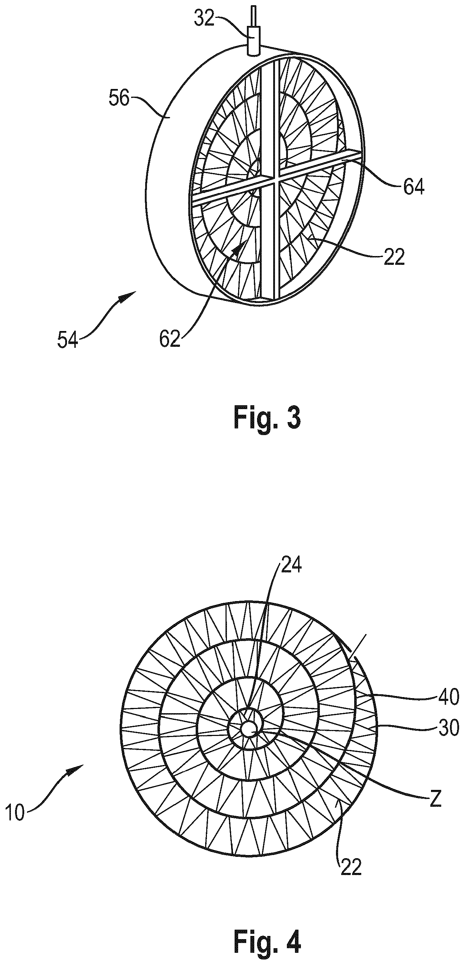

Die Fig. 3 zeigt die Integration des Heizleiterelements 22 in eine dieses in definierter Position haltende bzw. tragende Trägerstruktur 54. Diese ist zum Vermeiden eines elektrischen Kurzschlusses mit elektrisch isolierendem Material aufgebaut oder beschichtet. Die Trägerstruktur 54 umfasst ein rohrartiges bzw. zylindrisches Gehäuse 56, welches das spiralartig gewundene Heizleiterelement 52 außen umgibt. Das Gehäuse 56 kann zusammen mit dem darin angeordneten Heizleiterelement 22 in die abgasführende Komponente 16 der Abgasanlage 12 integriert werden oder kann durch die abgasführende Komponente 16 selbst bereitgestellt sein. An zumindest einer, vorzugsweise beiden Seiten des Heizleiterelements 22 betrachtet in der Abgashauptströmungsrichtung H, also sowohl der Anströmseite 58, als auch der Abströmseite 60, umfasst die Trägerstruktur 54 ein mit sternartiger bzw. kreuzartiger Konfiguration ausgebildetes Trägerelement 62 mit einer Mehrzahl von radial innen bezogen auf eine Längsmittenachse des Gehäuses 56 aneinander anschließenden Trägerarmen 64. Im radial äußeren Bereich sind diese an das Gehäuse 56 fest angebunden. Zwischen den an der Anströmseite 58 und der Abströmseite 60 angeordneten Trägerelementen 62 ist das Heizleiterelement 22 mit seinen beispielsweise durch das elektrisch isolierende Material 40 bezüglich einander elektrisch isoliert gehaltenen Heizleiter-Längenbereichen 26, 28 in definierter Position gehalten. Da auch die Trägerarme 64 des Trägerelements 62 bzw. der Trägerelemente 62 so angeordnet sind, dass ihre Stirnseiten bzw. Schmalseiten orthogonal zur Abgashauptströmungsrichtung H orientiert sind, führen auch diese nur einen geringen Strömungswiderstand ein.

Die Fig. 4 zeigt eine Abwandlung der in Fig. 1 dargestellten Ausgestaltungsart, bei welcher die Wellenhöhe in Richtung zum Längsendbereich 30 hin abnimmt, so dass das in die spiralartig gewundene Form gebrachte, grundsätzlich eine Wellenstruktur aufweisende Heizleiterelement 22 in seiner Gesamtheit eine näherungsweise kreisrunde Außenumfangskontur bereitstellt und somit bei Integration in das beispielsweise ebenfalls kreisrunde Gehäuse 56 bzw. die Abgasführungskomponente 16 im Wesentlichen keine Bereiche des Strömungsquerschnitts verbleiben, in welchen eine thermische Wechselwirkung zwischen dem Abgas und dem Heizleiterelement 22 nicht besteht. Um nach außen hin eine vollständige elektrische Isolierung zu erreichen, überdeckt das elektrisch isolierende Material 40 das Abgasheizelement 22 in seinem Längsendbereich 30 vollständig, so dass am Außenumfang ein vollständig geschlossener Ring des elektrisch isolierenden Materials 40 gebildet ist. An den Längsendbereichen 24, 30 erfolgt, wie vorangehend bereits erläutert, die elektrische Kontaktierung des Heizleiterelements 22, wobei beispielsweise am Längsendbereich 24 der Minus-Pol liegen kann und am Längsendbereich 30 der Plus-Pol liegen kann.

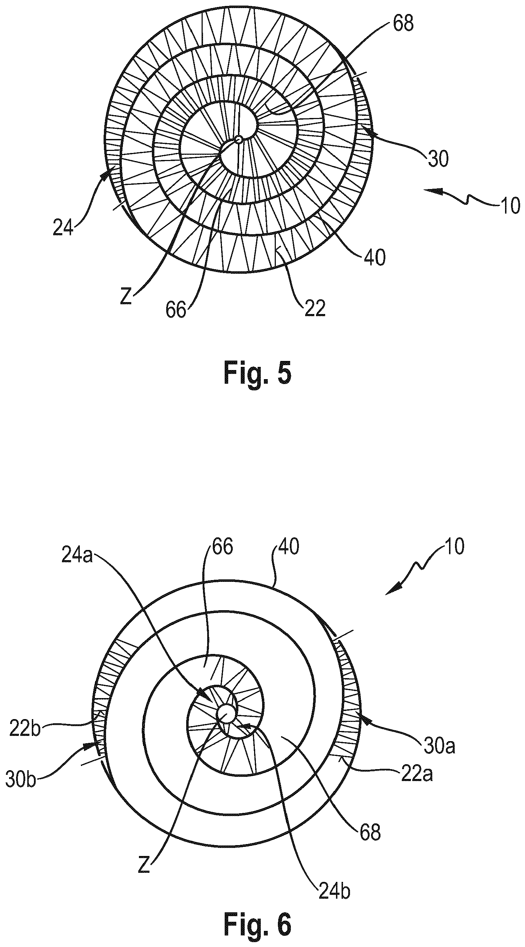

Die Fig. 5 zeigt eine Struktur, bei welcher das zwischen den Längsendbereichen 24, 30 sich erstreckende Heizleiterelement 22 grundsätzlich auch einen spiralartig gewundenen Verlauf aufweist, ausgehend vom Spiralzentrum Z jedoch zwei einander gegenseitig umgebende Spiralarme 66, 68 bildet. Zwischen diesen verläuft das vorangehend bereits erläuterte elektrisch isolierende Material.

In beiden nunmehr radial außen liegenden Längsendbereichen 24, 30 kann das Heizleiterelement 22 wieder eine abnehmende Wellenhöhe aufweisen, so dass wieder der näherungsweise kreisrunde oder elliptische Querschnitt erreicht werden kann, mit welchem das Heizleiterelement 22 an die Querschnittsgeometrie des Gehäuses 56 der Abgasführungskomponente 16 angepasst sein kann. Da keine elektrische Kontaktierung im Bereich des Spiralzentrums Z erforderlich ist, ist es auch nicht erforderlich, eine diese Kontaktierung bereitstellende elektrische Leitung durch den Abgasstrom hindurch nach radial innen zum Spiralzentrum Z zu führen.

Bei den vorangehend beschriebenen Ausgestaltungen eines Heizleiterelements deckt ein einziges Heizleiterelement 22 den gesamten von Abgas durchströmbaren Querschnitt ab. Dies führt dazu, dass aufgrund der vergleichsweise großen Länge des auch mit wellenartiger Struktur bereitgestellten Heizleiterelements dieses einen vergleichsweise großen elektrischen Widerstand bereitstellt. Werden hohe Heizleistungen benötigt, ist es daher vorteilhaft, bei derartiger Ausgestaltung das Heizleiterelement 22 mit einer vergleichsweise großen Erstreckungslänge d in der Dickenrichtung D von beispielsweise etwa 0,2 mm auszugestalten.

Da eine derartige vergleichsweise große Dicke des Heizleiterelements 22 auch zu einer an sich zu vermeidenden größeren thermischen Trägheit führt, kann bei dem in Fig. 6 dargestellten Ausgestaltungsbeispiel eine Struktur mit zwei jeweils einen Spiralarm 66, 68 bereitstellenden Heizleiterelementen 22a, 22b vorgesehen sein. Jedes der beiden Heizleiterelemente 22a, 22b weist im Vergleich zu der Struktur der Fig. 5 nur die halbe Länge zwischen einem jeweiligen radial innen liegenden Längsendbereich 24a, 24b und einem jeweiligen radial außen liegenden Längsendbereich 30a, 30b auf. Somit stellt jedes der beiden Heizleiterelemente 22a, 22b zwischen dem radial innen liegenden Kontaktpunkt und dem radial außen liegenden Kontaktpunkt den halben elektrischen Widerstand der in Fig. 5 dargestellten Ausgestaltung auf, so dass bei gleich großer zur Wärmeübertragung zur Verfügung stehender Oberfläche in jedem der Heizleiterelemente 22a, 22b ein vergleichsweise geringer elektrischer Widerstand erreicht wird und somit auch große Heizleistungen realisiert werden können.

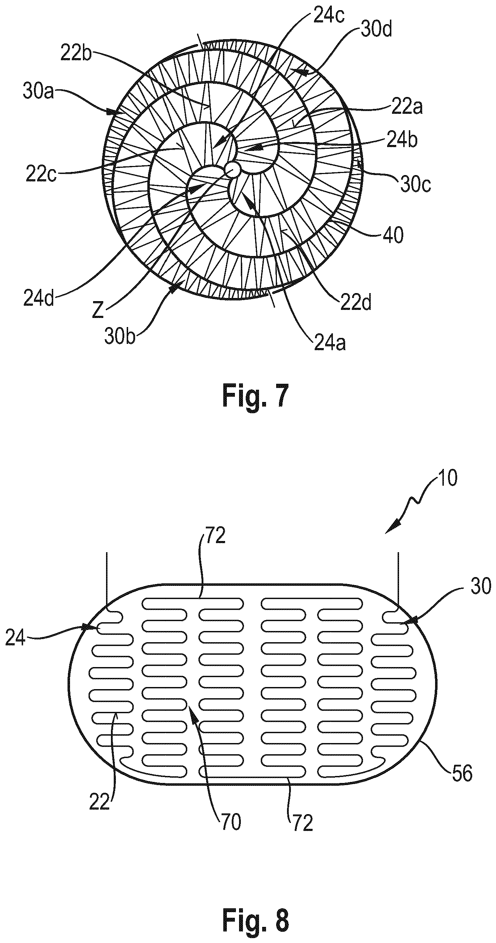

Diese Ausgestaltung weiterbildend zeigt die Fig. 7 eine Struktur, bei welcher insgesamt vier Heizleiterelemente 22a, 22b, 22c, 22d einander gegenseitig umgebend bzw. zueinander benachbart und durch elektrisch isolierendes Material 40 voneinander getrennt angeordnet sind. Jedes der Heizleiterelemente 22a, 22b, 22c, 22d weist eine noch kürzere Erstreckungslänge zwischen dem jeweiligen radial innen liegenden Längsendbereich 24a, 24b, 24c, 24d und dem jeweiligen radial außen liegenden Längsendbereich 30a, 30b, 30c, 30d und somit einen noch geringeren elektrischen Widerstand auf. Auch bei dieser Ausgestaltung erfolgt die elektrische Kontaktierung einerseits im Bereich des Spiralzentrums Z an den radial innen liegenden Längsendbereichen 24a, 24b, 24c, 24d und andererseits an den radial außen liegenden Längsendbereichen 30a, 30b, 30c, 30d. Insbesondere für die Kontaktierung radial außen können dann, wenn, wie in den Fig. 6 und 7 gezeigt, mehrere Heizleiterelemente vorgesehen sind, die jeweiligen radial außen liegenden Längsendbereiche 30a, 30b, 30c, 30d an einen Kontaktierungsring angeschlossen werden und somit gemeinsam mit einer Spannungsquelle verbunden werden.

Es ist darauf hinzuweisen, dass auch andere, insbesondere auch ungeradzahlige Anzahlen an Heizleiterelementen vorgesehen sein können, beispielsweise mit der in den Fig. 6 und 7 dargestellten einander gegenseitig spiralartig umgebenden Struktur.

Eine erfinduingsgemäße Ausgestaltungsvariante ist in Fig. 8 dargestellt. Diese zeigt ein mit wellenartiger Struktur ausgebildetes Heizleiterelement 22, welches zwischen seinen beiden zur elektrischen Kontaktierung vorgesehenen Längsendbereichen 24, 30 einen mäanderartigen Verlauf aufweist. Das Heizleiterelement 22 weist eine Mehrzahl von im Wesentlichen geradlinig sich erstreckenden, in sich jedoch mit der wellenartigen Struktur aufgebauten Heizleiterelement-Längenbereichen 70 auf, die in jeweiligen Übergangsbereichen 72 aneinander anschließen. Mit einer derartigen Ausgestaltung kann eine Anpassung an den Strömungsquerschnitt eines das Heizleiterelement 22 aufnehmenden Gehäuses 56, dieses beispielsweise bereitgestellt durch die auch die Abgasbehandlungseinheit 14 umfassende abgasführende Komponente 16, erreicht werden, insbesondere wenn dieser Strömungsquerschnitt nicht kreisrund, sondern beispielsweise elliptisch oder abgeflacht rund ist. Auch bei dieser Ausgestaltung können einander unmittelbar benachbarte Heizleiter-Längenbereiche 70 durch elektrisch isolierendes Material oder durch einen in Fig. 8 erkennbaren spaltartigen Zwischenraum voneinander getrennt sein.

Um auch bei derartiger Ausgestaltung zum Erhalt größerer Heizleistungen grundsätzlich einen geringeren elektrischen Widerstand bereitzustellen, können bei der in Fig. 9 dargestellten erfindungsgemäßen Ausgestaltung in dem Gehäuse 56 nebeneinander mehrere Heizleiterelemente 22a, 22b, 22c, 22d, 22e, 22f angeordnet sein. Die Längsendbereiche 24a, 24b, 24c, 24d, 24e, 24f können miteinander elektrisch leitend verbunden sein und beispielsweise an den Plus-Pol einer Spannungsquelle angeschlossen werden. Gleichermaßen können die Längsendbereiche 30a, 30b, 30c, 30d, 30e, 30f miteinander und beispielsweise einem Minus-Pol einer Spannungsquelle elektrisch leitend verbunden werden, so dass die insgesamt sechs Heizleiterelemente 22a, 22b, 22c, 22d, 22e, 22f zueinander parallel geschaltet sind und jedes dieser Heizleiterelemente einen vergleichsweise kleinen elektrischen Widerstand bereitstellt. Auch bei dieser Ausgestaltung können die einander unmittelbar benachbarten Heizleiterelemente 22a, 22b, 22c, 22d, 22e, 22f durch elektrisch isolierendes Material 40 oder einen spaltartigen Zwischenraum voneinander getrennt sein. Gleichermaßen können im Angrenzungsbereich an das Gehäuse 56 die Heizleiterelemente 22a, 22b, 22c, 22d, 22e, 22f durch derartige elektrisch isolierendes Material umgeben sein.

Die Fig. 12 und 13 zeigen eine Ausgestaltungsform des zwischen zwei Heizleiterelement-Längenbereichen, beispielsweise den Heizleiterelement-Längenbereichen 26, 28 des in Fig. 1 dargestellten Heizleiterelements 22, angeordneten elektrisch isolierenden Materials 40. Es wird darauf hingewiesen, dass auch bei den anderen vorangehend beschriebenen Ausgestaltungsformen zwischen zwei Heizleiterelement-Längenbereichen oder zwei einander benachbart angeordneten Heizleiterelementen derartiges elektrisch isolierendes Material 40 angeordnet sein kann.

Man erkennt, dass dieses elektrisch isolierende Material 40, beispielsweise bereitgestellt als Flachbandmaterial, in Zuordnung zu den Wellenscheiteln 34 der einander benachbart angeordneten Heizleiterelement-Längenbereiche 26, 28 zwischen benachbarte Wellenscheitel 34 eingreifende Positioniervorsprünge 74 bzw. zwischen zwei derartigen Positioniervorsprüngen 74 jeweils eine Positionieraussparung 76 aufweist. Durch die zwischen jeweils zwei benachbarte Wellenscheitel 34 desselben Heizleiterelement-Längenbereichs 26, 28 eingreifenden Positioniervorsprünge 74 bzw. die die Wellenscheitel 34 aufnehmenden Positionieraussparungen 76 wird eine definierte Positionierung der Wellenscheitel und somit der Heizleiterelement-Längenbereiche 26, 28 gewährleistet, so dass ein derart aufgebautes elektrisch isolierendes Material 40 ein Trägerelement 78 der Trägerstruktur 54 bereitstellen kann.

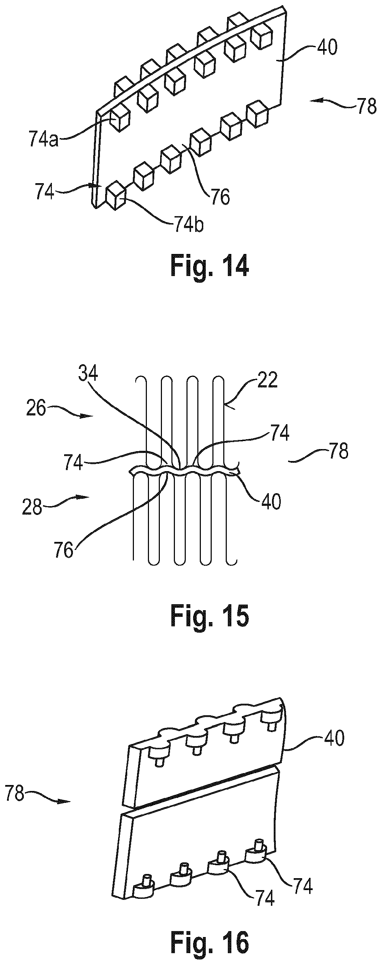

Während bei der in Fig. 13 dargestellten Ausgestaltungsform die Positioniervorsprünge 74 in der Breitenrichtung des elektrisch isolierenden Materials 40 vollständig durchlaufend ausgebildet sind, ist bei der in Fig. 14 dargestellten Ausgestaltungsform jeder der Positioniervorsprünge 74 mit zwei in der Breitenrichtung des elektrisch isolierenden Materials 40 voneinander getrennten Abschnitten 74a, 74b bereitgestellt. Dies ist insbesondere aufgrund der Reduzierung des Druckverlustes und somit für einen geringen Strömungswiderstand vorteilhaft. Ferner wird dadurch nur ein geringerer Anteil der zur Wärmeübertragung nutzbaren Oberfläche eines jeweiligen Heizleiterelements 22 durch die Positioniervorsprünge 74 überdeckt.

Eine weitere alternative Ausgestaltung eines für eine definierte Positionierung eines Heizleiterelements 22 vorgesehenen und ein Trägerelement 78 bereitstellenden elektrisch isolierenden Materials 40 ist in Fig. 15 dargestellt. Bei dieser Ausgestaltung weist das elektrisch isolierende Material 40 selbst eine wellenartige Struktur auf und stellt somit mit seinen Wellenscheiteln jeweilige Positioniervorsprünge 74 und mit seinen zwischen zwei Wellenscheiteln liegenden Bereichen Positionieraussparungen 76 bereit, in welchen die Wellenscheitel 34 des Heizleiterelements 22 bzw. der Heizleiterelement-Längenbereiche 26, 28 aufgenommen werden können.

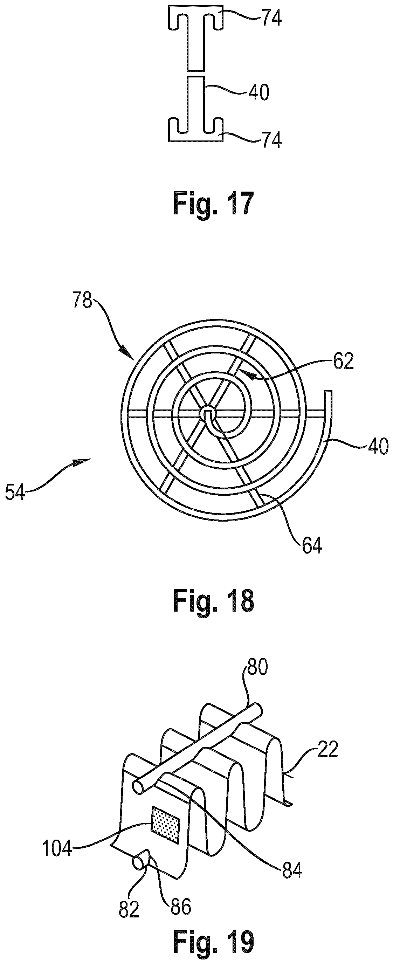

Eine weitere alternative Ausgestaltung ist in den Fig. 16 und 17 dargestellt. Hier ist das elektrisch isolierende Material 40 an seinen beiden Stirnseiten mit hakenartigen Positioniervorsprüngen 74 ausgebildet, welche ein Heizleiterelement bzw. Heizleiterelement-Längenbereiche desselben an dessen Stirnseiten im Bereich der Wellenscheitel übergreifen und hintergreifen und somit in definierter Position halten.

Die Fig. 18 zeigt eine Trägerstruktur 54, welche einerseits ein für einen spiralartigen Verlauf eines Heizleiterelements ausgebildetes und ein Trägerelement 78 bereitstellendes elektrisch isolierendes Material umfasst, das beispielsweise so wie in den Fig. 12 bis 17 dargestellt ausgebildet sein kann und somit nicht nur für die elektrische Isolierung von nebeneinander verlaufenden Heizleiterelement-Längenbereichen oder Heizleiterelementen sorgt, sondern auch eine definierte Positionierung für die Wellenscheitel derselben vorgibt. Ferner umfasst die Trägerstruktur 54 die kreuz- bzw. sternartig ausgebildeten Trägerelemente 62 mit den Trägerarmen 64 vorzugsweise sowohl an der Anströmseite, als auch der Abströmseite. Dort, wo die Trägerarme 64 das elektrisch isolierende Material 40 kreuzen bzw. überschneiden, können diese miteinander verbunden sein, um somit eine käfigartige Struktur zu definieren, welche ein oder mehrere Heizleiterelemente in definierter Positionierung aufnimmt. Beispielsweise können alle Bestandteile dieser käfigartigen Struktur aus elektrisch isolierendem Keramikmaterial aufgebaut sein und die käfigartige Struktur kann zumindest umfassend das elektrisch isolierende Material 40 und eines der Trägerelemente 62 als ein Formteil bereitgestellt sein.

Weitere alternative Ausgestaltungen zum Vorgeben einer definierten Positionierung bzw. auch einer elektrischen Isolierung für ein Heizleiterelement 22 sind in den Fig. 19 bis 21 dargestellt. Im Bereich der Wellenscheitel 34 weist das in Fig. 19 dargestellte Heizleiterelement 22 Aussparungen 84, 86 auf, in welchen ein jeweiliges Trägerelement 80, 82 eingreifend positioniert ist. Auf diese Art und Weise kann beispielsweise auch durch Reibwechselwirkung eine definierte Positionierung benachbarter Wellenscheitel 34 bezüglich einander vorgegeben werden und die Wellenscheitel 34 einander benachbarter Heizleiterelement-Längenbereiche können voneinander getrennt gehalten werden. Die Trägerelemente 80, 82 sind zum Vermeiden eines elektrischen Kurzschlusses aus elektrisch isolierendem Material, beispielsweise Keramikmaterial oder thermisch beständigem Kunststoffmaterial, aufgebaut.

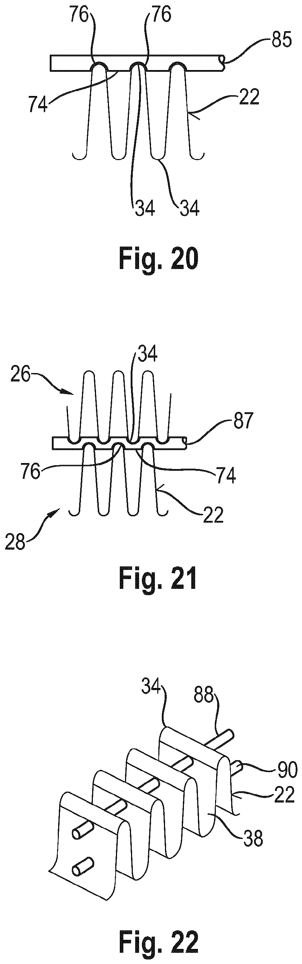

Bei der in Fig. 20 dargestellten Abwandlung ist ein derartiges steg- bzw. stabartig ausgebildetes Trägerelement 85 mit jeweilige Wellenscheitel 34 des Heizleiterelements 22 aufnehmenden Positionieraussparungen 76 und dazwischen liegenden Positioniervorsprüngen 74 aufgebaut, so dass die definierte Positionierung der Wellenscheitel 34 bezüglich einander unterstützt wird.

Die Fig. 21 zeigt eine Ausgestaltung, bei welcher ein derartiges Trägerelement 87 in Zuordnung zu einander benachbart angeordneten Heizleiterelement-Längenbereichen 26, 28 jeweils Positionieraussparungen 76 und dazwischen liegende Positioniervorsprünge 74 bereitstellt.

Die Fig. 22 zeigt eine Ausgestaltung, bei welcher zwei derartige steg- bzw. stabartige Trägerelemente 88, 90 die Wellen-Flächenabschnitte 38 des Heizleiterelements 22 durchsetzen und so für eine definierte Positionierung sorgen.

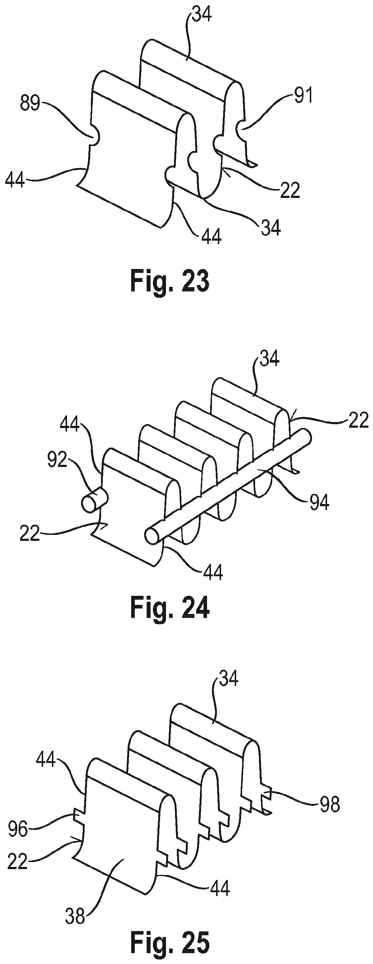

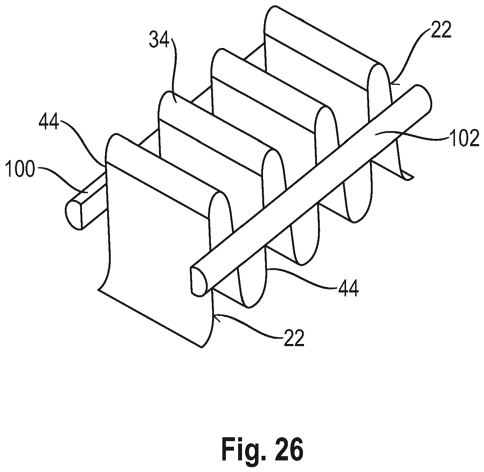

Die Fig. 23 und 24 zeigen eine Ausgestaltung, bei welcher an einem Heizleiterelement 22 im Bereich der Stirnseiten 44 jeweils Positionieraussparungen 89, 91 zur Aufnahme jeweils eines stabartigen Trägerelements 92, 94 ausgebildet sind. Bei der in den Fig. 25 und 26 dargestellten Ausgestaltung sind an den Stirnseiten 44 des Heizleiterelements 22 Positioniervorsprünge 96, 98 ausgebildet, die in jeweilige Positionieraussparungen von im Bereich der Stirnseiten 44 angeordneten, stab- oder stegartigen Trägerelementen 100, 102 eingreifend positioniert werden können.

Die Verwendung zweier derartiger stabartiger bzw. stegartiger Trägerelemente in den mit Bezug auf die Fig. 19 bis 26 beschriebenen Ausgestaltungsformen ist deshalb vorteilhaft, da dadurch auch eine Verdrehung bzw. Verwindung eines Heizleiterelements 22 unterbunden werden kann. Es ist selbstverständlich, dass eine derartige Struktur mit in verschiedenen Bereichen eines Heizleiterelements mit diesem zusammenwirkenden Trägerelementen der Trägerstruktur auch Anwendung finden kann, wenn, anders als in den Fig. 19 bis 26 dargestellt, das Heizleiterelement 22 keinen im Wesentlichen geradlinig sich erstreckenden Verlauf aufweist, sondern einen gekrümmten, beispielsweise spiralartigen Verlauf aufweist. Derartige stegartige bzw. stabartige Trägerelemente können integriert sein in die beispielsweise in Fig. 18 dargestellte Trägerstruktur bzw. können einen Teil derselben bilden und beispielsweise gleichermaßen aus keramischem Material aufgebaut sein.

In Fig. 19 ist schematisch angedeutet, dass bei einer erfindungsgemäß aufgebauten Abgasheizeinheit 10 ein oder mehrere Heizleiterelemente 22 an der zur Wärmeübertragung vorgesehenen Oberfläche derselben teilweise oder vollständig mit katalytisch wirksamem Material 104 überzogen sein kann. Je nachdem, welche katalytische Funktion bereitgestellt werden soll, kann hierfür geeignetes Beschichtungsmaterial ausgewählt sein. Beispielsweise kann das so beschichtete Heizleiterelement 22 zur Bereitstellung einer Drei-Wege-Katalysator-Funktion mit Platin oder/und Palladium oder/und Rhodium enthaltendem Material beschichtet sein. Zur Bereitstellung einer Hydrolyse-Katalysatorfunktion kann das katalytisch wirksame Material Titanoxid oder/und Zirkoniumoxid oder/und Aluminiumoxid enthalten. Eine derartige Hydrolyse-Katalysatorfunktion ist insbesondere dann vorteilhaft, wenn stromaufwärts der Abgasheizeinheit 10 eine Harnstoff/WasserLösung eingedüst wird. Zur Bereitstellung einer Stickoxid-Speicherkatalysatorfunktion kann das katalytisch wirksame Material 104 Platin oder/und Palladium oder/und Barium enthalten. Zur Bereitstellung einer Diesel-Oxidationskatalysatorfunktion kann das katalytisch wirksame Material Platin oder/und Palladium enthalten. Zur Bereitstellung einer SCR-Katalysatorfunktion kann das katalytisch wirksame Material 104 Eisen-Zeolith oder/und Kupfer-Zeolith oder/und Vanadiumoxid enthalten. Um eine gute Haftung einer Beschichtung mit derartigem katalytisch wirksamem Material 104 auf dem Heizleiterelement 22 zu erreichen, ist es vorteilhaft, für das Aufbaumaterial des Heizleiterelements 22 eine Legierung mit hohem Aluminiumanteil zu verwenden und die zu beschichtende Fläche einer Temperaturbehandlung zu unterziehen. Beispielsweise kann eine so genannte FeCr-Alloy, 1.4767 als Aufbaumaterial verwendet werden.

Durch das Vorsehen einer derartigen Beschichtung mit katalytisch wirksamem Material an der von Abgas umströmbaren Oberfläche eines mit Flachbandmaterial aufgebauten Heizleiterelements wird gewährleistet, dass im Wesentlichen sofort bei Erregung des Heizleiterelements und Erwärmung desselben auch die Beschichtung mit katalytisch wirksamem Material auf eine ausreichend hohe Temperatur gebracht wird, dass die durch dieses Material vorzusehende katalytische Reaktion einsetzt. Dies bedeutet, dass bereits in einer Phase, in welcher eine stromabwärts folgende Abgasbehandlungseinheit noch nicht ausreichend erwärmt ist, im Bereich der Abgasheizeinheit bereits eine katalytische Reaktion ablaufen kann und somit der Schadstoffanteil im Abgas gemindert werden kann.

Mit dem erfindungsgemäßen Aufbau einer Abgasbehandlungseinheit wird die Möglichkeit geschaffen, eine effiziente Erwärmung des von einer Brennkraftmaschine ausgestoßenen Abgases zu erreichen, da einerseits die Abgasheizeinheit mit dem wenigstens eine durch elektrische Erregung erwärmbaren Heizleiterelement aus Flachbandmaterial eine sehr große Oberfläche zur thermischen Wechselwirkung mit dem Abgas bereitstellt und andererseits das Abgas unmittelbar in thermische Wechselwirkung mit dem Heizleiterelement treten kann. Durch die wellenartige Struktur des wenigstens einen Heizleiterelements und den der wellenartigen Struktur überlagerten, beispielsweise spiralartigen oder mäanderartigen Verlauf des wenigstens einen Heizleiterelements wird die Möglichkeit geschaffen, im Wesentlichen den ganzen vom Abgas durchströmten Querschnitt einer Abgasführungskomponente bzw. eines das wenigstens einen Heizleiterelement aufnehmenden Gehäuses abzudecken bzw. zur Wärmeübertragung zu nutzen.

## Patentansprüche

1. Abgasheizeinheit für eine Abgasanlage einer Brennkraftmaschine, umfassend wenigstens ein aus gebogenem Flachbandmaterial (48) mit wellenartiger Struktur aufgebautes, elektrisch leitendes Heizleiterelement (22), wobei:
- das wenigstens eine Heizleiterelement (22) mit mäanderartigem Verlauf angeordnet ist, wobei einander benachbart verlaufende, bezüglich einander elektrisch isoliert angeordnete Heizleiterelement-Längenbereiche (70) durch in Übergangsbereichen (72) aneinander anschließende, nebeneinander verlaufende Mäanderabschnitte bereitgestellt sind,
oder
- eine Mehrzahl von aus gebogenem Flachbandmaterial mit wellenartiger Struktur aufgebauten, bezüglich einander elektrisch isoliert angeordneten, im Wesentlichen geradlinig langgestreckte, nebeneinander verlaufende Heizleiterelement-Längenbereiche bereitstellenden Heizleiterelementen (22a, 22b, 22c, 22d, 22e, 22f) vorgesehen ist,
**dadurch gekennzeichnet, dass** die einander benachbart verlaufenden Heizleiterelement-Längenbereiche (70) durch Anordnen von elektrisch isolierendem, flachbandartigem Material (40) zwischen diesen bezüglich einander elektrisch isoliert sind.

2. Abgasheizeinheit nach Anspruch 1, **dadurch gekennzeichnet, dass** das wenigstens eine Heizleiterelement (22) im Wesentlichen parallel zu einer Abgashauptströmungsrichtung (H) anzuordnende Breitenseiten (42) und im Wesentlichen orthogonal zur Abgashauptströmungsrichtung (A) anzuordnende Stirnseiten (44) aufweist, und dass eine Erstreckungslänge (b) der Breitenseiten (42) des Heizleiterelements (22) in einer Breitenrichtung (B) im Bereich von 10 mm bis 20 mm liegt.

3. Abgasheizeinheit nach einem der vorangehenden Ansprüche, **dadurch gekennzeichnet, dass** bei Ausgestaltung mit einer Mehrzahl von aus gebogenem Flachbandmaterial aufgebauten, bezüglich einander elektrisch isoliert angeordneten Heizleiterelementen (22a, 22b, 22c, 22d, 22e, 22f) wenigstens ein Teil der Heizleiterelemente (22a, 22b, 22c, 22d, 22e, 22f) zueinander elektrisch parallel geschaltet ist.

4. Abgasheizeinheit nach einem der vorangehenden Ansprüche, **dadurch gekennzeichnet, dass** eine das wenigstens eine Heizleiterelement (22) in vorgegebener Position tragende Trägerstruktur (54) vorgesehen ist.

5. Abgasheizeinheit nach Anspruch 4, **dadurch gekennzeichnet,**
**dass** die Trägerstruktur (54) wenigstens ein Trägerelement (78; 80, 82; 84; 86) mit zwischen Scheitelbereiche (34) der wellenartigen Struktur des wenigstens einen Heizleiterelements (22) eingreifenden Positioniervorsprüngen (74) umfasst.

6. Abgasheizeinheit nach Anspruch 4 oder 5, **dadurch gekennzeichnet,**
**dass** die Trägerstruktur (54) wenigstens ein Trägerelement (78; 80, 82; 84; 86) mit Scheitelbereiche (34) der wellenartigen Struktur des wenigstens einen Heizleiterelements (22) aufnehmenden Positionieraussparungen (76) umfasst.

7. Abgasheizeinheit nach Anspruch 4, 5 oder 6, **dadurch gekennzeichnet,**
**dass** die Trägerstruktur (54) wenigstens ein in Positionieraussparungen (84, 86) in Scheitelbereichen (34) des wenigstens einen Heizleiterelements (22) eingreifendes Trägerelement (80, 82) umfasst.

8. Abgasheizeinheit nach einem der Ansprüche 4-7, **dadurch gekennzeichnet, dass** die Trägerstruktur (54) wenigstens ein an zwischen Wellenscheiteln (34) der wellenartigen Struktur des wenigstens einen Heizleiterelements (22) verlaufenden Wellen-Flächenabschnitten (42) gehaltenes Trägerelement (88, 90; 92, 94; 100, 102) umfasst.

9. Abgasheizeinheit nach Anspruch 8, **dadurch gekennzeichnet, dass** wenigstens ein Trägerelement (88, 90) die Wellen-Flächenabschnitte (42) durchsetzt.

10. Abgasheizeinheit nach Anspruch 8 oder 9, **dadurch gekennzeichnet, dass** wenigstens ein Trägerelement (92, 94; 100, 102) an einer Stirnseite (44) des wenigstens einen Heizleiterelements (22) im Bereich der Wellen-Flächenabschnitte (42) getragen ist.

11. Abgasheizeinheit nach einem der Ansprüche 4-10, **dadurch gekennzeichnet, dass** die Trägerstruktur (54) wenigstens ein an einer Stirnseite (44) des wenigstens einen Heizleiterelements (22) angeordnetes Trägerelement (62) mit einer Mehrzahl von vorzugsweise in sternartiger Konfiguration angeordneten Trägerarmen (64) umfasst.

12. Abgasheizeinheit nach einem der Ansprüche 4-11, **dadurch gekennzeichnet, dass** die Trägerstruktur (54) das elektrisch isolierende Material (40) umfasst.

13. Abgasheizeinheit nach einem der vorangehenden Ansprüche, dass das wenigstens eine Heizleiterelement (22) wenigstens bereichsweise mit katalytisch wirksamem Material (104) beschichtet ist.

14. Abgasheizeinheit nach Anspruch 13, **dadurch gekennzeichnet, dass** das katalytisch wirksame Material (104), vorzugsweise enthaltend Platin oder/und Palladium oder/und Rhodium, eine Drei-Wege-Katalysatorfunktion bereitstellt.

15. Abgasanlage für eine Brennkraftmaschine, umfassend wenigstens eine Abgasheizeinheit (10) nach einem der vorangehenden Ansprüche.

16. Abgasanlage nach Anspruch 15, **dadurch gekennzeichnet,**
**dass** die wenigstens eine Abgasheizeinheit (10) stromaufwärts bezüglich wenigstens einer Abgasbehandlungseinheit (14), vorzugsweise Katalysatoreinheit oder/und Partikelfiltereinheit, angeordnet ist.

17. Abgasanlage nach Anspruch 15 oder 16, **dadurch gekennzeichnet, dass** das wenigstens eine Heizleiterelement (22) der wenigstens einen Abgasheizeinheit (10) mit in einer Breitenrichtung (B) sich erstreckenden Breitenseiten (42) im Wesentlichen parallel zu einer Abgashauptströmungsrichtung (H) angeordnet ist und mit in einer Dickenrichtung sich erstreckenden Stirnseiten (44) im Wesentlichen orthogonal zur Abgashauptströmungsrichtung (H) angeordnet ist.

## Claims

1. An exhaust gas heating unit for an exhaust gas system of an internal combustion engine, comprising at least one electrically conductive heating conductor element (22), constructed from bent flat strip material (48) with a wave-like structure, wherein :
- the at least one heating conductor element (22) is arranged with a meandering form, wherein mutually adjacent heating conductor element length regions (70) arranged in an electrically insulated manner with respect to one another are provided by meandering sections which run next to one another and are connected to one another in transitional regions (72),
or
- a plurality of heating conductor elements (22a, 22b, 22c, 22d, 22e, 22f) are provided, which are constructed from bent flat strip material with a wave-like structure and arranged in an electrically insulated manner with respect to one another providing heating conductor element length regions, extending substantially in a straight elongated way and running adjacent to another,
**characterized in that** the heating conductor element length regions (70) which run adjacent to one another are electrically insulated with respect to one another by arranging electrically insulating, flat-strip-type material (40) between them.

2. The exhaust gas heating unit as claimed in claim 1, **characterized in that** the at least one heating conductor element (22) has broad sides (42), which are to be arranged substantially parallel to an exhaust gas primary flow direction (H), and end faces (44), which are to be arranged substantially orthogonally with respect to the exhaust gas primary flow direction (A), and **in that** a length of extent (b) of the broad sides (42) of the heating conductor element (22) in a width direction (B) is in the range of 10 mm to 20 mm.

3. The exhaust gas heating unit as claimed in one of the preceding claims, **characterized in that** when formed with a plurality of heating conductor elements (22a, 22b, 22c, 22d, 22e, 22f) made of bent flat-strip-type material and arranged electrically isolated to one another, at least some of the heating conductor elements (22a, 22b, 22c, 22d, 22e, 22f) are connected electrically in parallel with one another.

4. The exhaust gas heating unit as claimed in one of the preceding claims, **characterized in that** a support structure (54) is provided which supports the at least one heating conductor element (22) in the predefined position.

5. The exhaust gas heating unit as claimed in claim 4, **characterized in that** the support structure (54) comprises at least one support element (78; 80, 82; 84; 86) having positioning projections (74) which engage between peak regions (34) of the wave-like structure of the at least one heating conductor element (22).

6. The exhaust gas heating unit as claimed in claim 4 or 5, **characterized in that** the support structure (54) comprises at least one support element (78; 80, 82; 84; 86) having positioning recesses (76) which receive peak regions (34) of the wave-like structure of the at least one heating conductor element (22).

7. The exhaust gas heating unit as claimed in claim 4, 5 or 6, **characterized in that** the support structure (54) comprises at least one support element (80, 82) which engages in positioning recesses (84, 86) in peak regions (34) of the at least one heating conductor element (22).

8. The exhaust gas heating unit as claimed in one of claims 4-7, **characterized in that** the support structure (54) comprises at least one support element (88, 90; 92, 94; 100, 102), which is held on wave surface sections (42) which run between wave peaks (34) of the wave-like structure of the at least one heating conductor element (22).

9. The exhaust gas heating unit as claimed in claim 8, **characterized in that** at least one support element (88, 90) passes through the wave surface sections (42).

10. The exhaust gas heating unit as claimed in claim 8 or 9, **characterized in that** at least one support element (92, 94; 100, 102) is supported on an end face (44) of the at least one heating conductor element (22) in the region of the wave surface sections (42).

11. The exhaust gas heating unit as claimed in one of claims 4-10, **characterized in that** the support structure (54) comprises at least one support element (62), which is arranged on an end face (44) of the at least one heating conductor element (22) and has a plurality of support arms (64), which are preferably arranged in a star-like configuration.

12. The exhaust gas heating unit as claimed in any of claims 4-11 **characterized in that** the support structure (5 4) comprises the electrically insulating material (40).

13. The exhaust gas heating unit as claimed in any of the preceding claims, **characterized in that** the at least one heating conductor element (22) is coated, at least in some regions, with catalytically active material (104).

14. The exhaust gas heating unit as claimed in claim 13, **characterized in that** the catalytically active material (104), preferably containing platinum or/and palladium or/and rhodium, provides a three-way catalyst function.

15. An exhaust gas system for an internal combustion engine, comprising at least one exhaust gas heating unit (10) as claimed in any of the preceding claims.

16. The exhaust gas system as claimed in claim 15, **characterized in that** the at least one exhaust gas heating unit (10) is arranged upstream with respect to at least one exhaust gas treatment unit (14), preferably a catalytic converter unit or/and a particle filter unit.

17. The exhaust gas system as claimed in claim 15 or 16, **characterized in that** the at least one heating conductor element (22) of the at least one exhaust gas heating unit (10) is arranged substantially parallel to an exhaust gas primary flow direction (H) with broad sides (42) which extend in a width direction (B), and is arranged substantially orthogonal to the exhaust gas primary flow direction (H) with end faces (44) which extend in a thickness direction.

## Revendications

1. Une unité de chauffage des gaz d'échappement pour un système de gaz d'échappement d'un moteur à combustion interne, comprenant au moins un élément conducteur chauffant (22) électriquement conducteur, construit à partir d'une bande plate pliée (48) avec une structure ondulée, dans laquelle :
- ledit au moins un élément conducteur chauffant (22) est disposé avec une forme de méandre, dans laquelle des zones de longueur d'élément conducteur chauffant mutuellement adjacentes (70) disposées de manière isolée électriquement les unes par rapport aux autres sont fournies par des sections de méandre qui s'étendent les unes à côté des autres et sont reliées les unes aux autres dans des zones de transition (72),
ou
- une pluralité d'éléments conducteurs chauffants (22a, 22b, 22c, 22d, 22e, 22f) sont prévus, qui sont construits à partir de bandes plates pliées avec une structure ondulée et disposés de manière isolée électriquement les uns par rapport aux autres, fournissant des zones de longueur d'élément conducteur chauffant, s'étendant de manière sensiblement droite et allongée et s'étendant les unes à côté des autres,
**caractérisées en ce que** les zones de longueur de l'élément conducteur de chauffage (70) qui sont adjacentes sont isolées électriquement l'une par rapport à l'autre en plaçant entre elles un matériau isolant électrique de type bande plate (40).

2. L'unité de chauffage des gaz d'échappement selon la revendication 1, **caractérisée en ce que** ledit au moins un élément conducteur chauffant (22) a des côtés larges (42), qui doivent être disposés sensiblement parallèlement à une direction d'écoulement primaire des gaz d'échappement (H), et des faces d'extrémité (44), qui doivent être disposées sensiblement orthogonalement par rapport à la direction d'écoulement primaire des gaz d'échappement (A), et **en ce qu'**une longueur d'étendue (b) des côtés larges (42) de l'élément conducteur chauffant (22) dans une direction de largeur (B) est comprise entre 10 mm et 20 mm.

3. L'unité de chauffage des gaz d'échappement selon l'une des revendications précédentes, **caractérisée en ce que**, lorsqu'elle est formée d'une pluralité d'éléments conducteurs chauffants (22a, 22b, 22c, 22d, 22e, 22f) en matériau plat plié et disposés de manière isolée électriquement les uns par rapport aux autres, au moins certains des éléments conducteurs chauffants (22a, 22b, 22c, 22d, 22e, 22f) sont connectés électriquement en parallèle les uns avec les autres.

4. L'unité de chauffage des gaz d'échappement selon l'une des revendications précédentes, **caractérisée en ce qu'**une structure de support (54) est présente qui soutient au moins un élément conducteur chauffant (22) dans la position prédéfinie.

5. L'unité de chauffage des gaz d'échappement selon la revendication 4, **caractérisée en ce que** la structure de support (54) comprend au moins un élément de support (78 ; 80, 82 ; 84 ; 86) ayant des projections de positionnement (74) qui s'engagent entre les zones de crête (34) de la structure en forme de vague dudit au moins un élément conducteur chauffant (22).

6. L'unité de chauffage des gaz d'échappement selon la revendication 4 ou 5, **caractérisée en ce que** la structure de support (54) comprend au moins un élément de support (78 ; 80, 82 ; 84 ; 86) ayant des évidements de positionnement (76) qui reçoivent les zones de crête (34) de la structure ondulée d'au moins un élément conducteur de chauffage (22).

7. L'unité de chauffage des gaz d'échappement selon la revendication 4, 5 ou 6, **caractérisée en ce que** la structure de support (54) comprend au moins un élément de support (80, 82) qui s'engage dans les évidements de positionnement (84, 86) dans les zones de crête (34) dudit au moins un élément conducteur chauffant (22).

8. L'unité de chauffage des gaz d'échappement selon l'une des revendications 4 à 7, **caractérisée en ce que** la structure de support (54) comprend au moins un élément de support (88, 90 ; 92, 94 ; 100, 102), qui est maintenu sur les sections de surface d'onde (42) qui s'étendent entre les crêtes d'onde (34) de la structure en forme d'onde dudit au moins un élément conducteur de chauffage (22).

9. L'unité de chauffage des gaz d'échappement selon la revendication 8, **caractérisée en ce qu'**au moins un élément de support (88, 90) traverse les sections de surface d'onde (42).

10. L'unité de chauffage des gaz d'échappement selon la revendication 8 ou 9, **caractérisée en ce qu'**au moins un élément de support (92, 94 ; 100, 102) est soutenu sur une face d'extrémité (44) dudit au moins un élément conducteur chauffant (22) dans la zone des sections de surface d'onde (42).

11. L'unité de chauffage des gaz d'échappement selon l'une des revendications 4 à 10, **caractérisée en ce que** la structure de support (54) comprend au moins un élément de support (62), qui est disposé sur une face d'extrémité (44) dudit au moins un élément conducteur chauffant (22) et possède une pluralité de bras de support (64), qui sont de préférence disposés en étoile.

12. L'unité de chauffage des gaz d'échappement selon l'une des revendications 4 à 11, **caractérisée en ce que** la structure de support (54) comprend le matériau électriquement isolant (40).

13. L'unité de chauffage des gaz d'échappement selon l'une des revendications précédentes, **caractérisée en ce que** ledit au moins un élément conducteur de chauffage (22) est revêtu, au moins dans certaines zones, d'un matériau catalytiquement actif (104).

14. L'unité de chauffage des gaz d'échappement selon la revendication 13, **caractérisée en ce que** le matériau catalytiquement actif (104), contenant de préférence du platine ou/et du palladium ou/et du rhodium, assure une fonction de catalyseur à trois voies.

15. Un système de gaz d'échappement pour un moteur à combustion interne, comprenant au moins une unité de chauffage des gaz d'échappement (10) selon l'une des revendications précédentes.

16. Le système de gaz d'échappement selon la revendication 15, **caractérisé en ce que** ledit au moins une unité de chauffage des gaz d'échappement (10) est disposée en amont d'au moins une unité de traitement des gaz d'échappement (14), de préférence une unité de convertisseur catalytique et/ou une unité de filtre à particules.

17. Le système de gaz d'échappement selon la revendication 15 ou 16, **caractérisé en ce que** ledit au moins un élément conducteur chauffant (22) dudit au moins une unité de chauffage des gaz d'échappement (10) est disposé sensiblement parallèlement à une direction d'écoulement primaire des gaz d'échappement (H) avec des côtés larges (42) qui s'étendent dans une direction de largeur (B), et est disposé sensiblement orthogonalement à la direction d'écoulement primaire des gaz d'échappement (H) avec des faces d'extrémité (44) qui s'étendent dans une direction d'épaisseur.
